(19) Europäisches Patentamt
European Patent Office
Office européen des brevets

(11) **EP 3 788 327 B1**

(12) **EUROPÄISCHE PATENTSCHRIFT**

(45) Veröffentlichungstag und Bekanntmachung des Hinweises auf die Patenterteilung:
**30.08.2023   Patentblatt 2023/35**

(21) Anmeldenummer: **19723645.8**

(22) Anmeldetag: **30.04.2019**

(51) Internationale Patentklassifikation (IPC):
**G01G 11/00** *(2006.01)*      **G01M 1/30** *(2006.01)*
**G01G 23/01** *(2006.01)*      **G01G 23/06** *(2006.01)*

(52) Gemeinsame Patentklassifikation (CPC):
**G01G 11/006; G01G 23/01; G01G 23/06; G01M 1/30**

(86) Internationale Anmeldenummer:
**PCT/DE2019/100389**

(87) Internationale Veröffentlichungsnummer:
**WO 2019/210910 (07.11.2019 Gazette 2019/45)**

(54) **VERFAHREN ZUR OPTIMIERUNG EINES WÄGEBANDES**

METHOD FOR OPTIMIZING A WEIGHING BELT

PROCÉDÉ D'OPTIMISATION D'UNE BANDE DE PESÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2018   DE 102018110797**

(43) Veröffentlichungstag der Anmeldung:
**10.03.2021   Patentblatt 2021/10**

(73) Patentinhaber: **WIPOTEC GmbH**
**67657 Kaiserslautern (DE)**

(72) Erfinder: **GOTTFRIEDSEN, Jan**
**67714 Waldfischbach-Burgalben (DE)**

(74) Vertreter: **Eder Schieschke & Partner mbB**
**Patentanwälte**
**Elisabethstraße 34**
**80796 München (DE)**

(56) Entgegenhaltungen:
DE-A1- 4 011 724          DE-A1- 4 446 163
DE-A1-102007 027 394

**Beschreibung**

Die Erfindung betrifft ein Verfahren zum Wuchten eines Gurtes bzw. eines Bandes eines Bandförderers, insbesondere eines Wägebandförderers, sowie eine Vorrichtung zur Durchführung eines derartigen Verfahrens.

Förderbänder - auch Gurte oder Riemen genannt - werden üblicherweise aus einem oder mehreren einzelnen Bandabschnitten hergestellt, deren Enden miteinander zu einem geschlossenen Endlosband verbunden werden. Meist steht bei Förderbändern nur die Aufgabe im Vordergrund, Schüttgut oder diskrete Produkte zu transportieren, wozu das Endlosband und insbesondere die Verbindungsstellen der einzelnen Bandabschnitte die nötige Festigkeit aufweisen müssen.

Bei Anwendungen von Förderbändern in der Wägetechnik, etwa bei hochpräzisen, dynamischen, selbsttätigen Wägeanlagen oder Waagen, bei denen die Förderbänder als Teil von Transportvorrichtungen Vorlast für eine Wägezelle bilden (Wägebandförderer), muss das Förderband jedoch zusätzlich eine möglichst homogene Massenverteilung aufweisen. Inhomogene Massenverteilungen führen beim Umlauf des Förderbandes zu unerwünschten Störkräften (Gurtschlag bzw. Unwucht), welche in die Wägezelle eingeleitet werden und das Messergebnis verfälschen. Der Gurtschlag ist insbesondere bei schnell laufenden Transportbändern zu hoch, um genau genug zu wiegen.

Solche Störkräfte treten (bei ebener, insbesondere horizontaler Bandführung) insbesondere dann auf, wenn ein Bereich mit inhomogen verteilter Masse an den Rollen des als Wägeband eingesetzten Förderbandes umgelenkt wird. Eine hohe Wahrscheinlichkeit für inhomogene Massenverteilungen besteht meist entlang der Verbindungsstellen bzw. Verbindungsnähte, das heißt im Bereich der Bandabschnitte, die zur Herstellung des Wägebandes durch verschiedene Techniken miteinander verbunden werden.

Entsprechend sind bereits Verfahren bekannt, beispielsweise aus der DE 39 33 710 A1 und der DE 20 2006 008 946 U1, die sich mit der Verbesserung der Verbindungsstellen der Endlosbänder befassen.

Es sind weiterhin Maßnahmen bekannt, mit Hilfe eines Filters eine solche Unwucht (Gurtschlag) bei der Messwertverarbeitung zu berücksichtigen bzw. herauszurechnen. Die Verwendung von Filtern verzögert aber die Signalauswertung und benötigt Zeit, die bei schnellen Wägevorgängen für einen solchen Zweck meist nicht ausreichend zur Verfügung steht. Insbesondere ist eine Mittelung der Störgröße über die gesamte Riemenlänge nicht möglich, wenn mehrere Güter pro Umlauf gewogen werden. Zwar könnte ein Filter mit der Umlauffrequenz des Riemens synchronisiert werden, allerdings können Drehzahländerungen des Riemens zu Störungen dieser Filterfunktion führen.

Allerdings können auch andere Inhomogenitäten des Bandes bzw. ungleiche Massenverteilung bei der Herstellung des Bandes, beispielsweise Auftrag einer Deckschicht auf ein Gewebe, etc., auftreten, die zu Störkräften führen und nachteiligerweise ein Gewichtssignal verfälschen.

Der vorliegenden Erfindung liegt daher die Aufgabe zugrunde ein Verfahren sowie eine Vorrichtung zu schaffen, welche eine Optimierung der Laufeigenschaften eines Bandes eines Wägebandförderers ermöglicht.

Insbesondere soll durch die Erfindung eine Korrektur (Verringerung) oder gar eine Beseitigung von (bestehenden) Störparameter, insbesondere Unwucht, eines Bandes (im Folgenden auch Gurt genannt) eines Wägebandförderers ermöglicht werden, die ein Gewichtssignal verfälschen können.

Das Band eines Wägebandförderers stellt ein Endlosband dar, welches über mehrere Wellen (zwei, drei oder mehrere Wellen) geführt ist. Ist ein Band bezüglich seiner Masse über seine gesamte Erstreckung nicht ideal homogen ausgebildet, so können derartige Inhomogenitäten der Masse, insbesondere bei einer Umlenkung aus einer linearen Bewegung, vorzugsweise mit konstanter Geschwindigkeit, Störkräfte (zum Sensor gleichgerichtete Anteile von Zentripetalkraft bzw. Zentrifugalkraft) verursachen, die ein Gewichtssignal verfälschen.

Nach der Erfindung ist vorzugsweise die Betrachtung der Masse über die Länge des Bandumfangs ausreichend. Die Betrachtung des Verlaufs der Masse über die Fläche des Bandes (Massenbelag) ist dagegen nicht zwingend erforderlich, da die Masseninhomogenität über die Bandbreite (quer zur Förderrichtung) nur zu einem Drehmoment an der Umlenkung führt und das ermittelte Kraftsignal nicht beeinträchtigt.

Nach der Erfindung wird eine Abweichung von einem vorgegebenen oder ermittelten (beispielsweise Mittelwert) Sollwert eines Kraftsignals, beispielsweise mittels eines Kraft- oder Beschleunigungssensors, der die Kraft oder Beschleunigung in einer vordefinierten Richtung, vorzugsweise senkrecht zum Festland, über wenigstens einen Umlauf des Bandes, detektiert, ermittelt und vorzugsweise aufgezeichnet (beispielsweise in einer Speichereinrichtung gespeichert). Entsprechend liegt diese Abweichung in Abhängigkeit von der Position des Bandes bzw. dem zurückgelegten Weg des Bandes vor.

Um einen Bezug zwischen Bandposition und Signal, vorzugsweise Kraftsignal, herzustellen, wird eine eindeutige Referenzposition in Umlaufrichtung des Bandes bestimmt. Hierzu kann beispielsweise, vorzugsweise nur temporär (für die Optimierung des Bandes), auf dem Band eine (nach der Optimierung entfernbare) Markierung angebracht werden, die mit einem Detektor, beispielsweise Reflexlichtschranke, detektiert wird. Selbstverständlich ist es auch denkbar eine Referenzposition durch eine andere Festlegung, beispielsweise durch eine eindeutige Position einer Wellenachse, zu bestimmen.

Erfindungsgemäß ist wenigstens die Richtung der Abweichung des Signals bekannt, so dass an der entsprechenden Stelle des Bandes Material hinzugefügt oder Bandmaterial entfernt wird. Hält man die Beträge der Veränderungen bzw. deren Massen im Verhältnis zur Gesamtmasse des Bandes und Bandumfang gering, kann hierdurch auf einfache Weise durch erneute Anwendung der vorgenannten Schritte eine iterative Verminderung der Abweichung erreicht werden, bis eine vorzugsweise geforderte bzw. vordefinierte Toleranz (maximal zulässige Abweichung bzw. Amplitude der Abweichung) eingehalten wird.

In bevorzugter Ausgestaltung wird die eindeutige Referenzposition für jeden Umlauf detektiert, um Positionsfehler - beispielsweise bedingt durch Schlupf zwischen Band und Welle - zu minimieren. Dennoch wäre es auch denkbar, mehrere Umläufe in Bezug zu einer einmal bestimmten Referenzposition zu stellen, beispielsweise bei Vorliegen der pro Umlauf notwendigen Umdrehungen einer Wellenachse, bei bekanntem Bandumfang und bekanntem Durchmesser der Wellenachse.

In bevorzugter Ausgestaltung der Erfindung wird aus der Störkraft eine Abweichung des Verlaufs der Homogenität des Massenbelages (über den Umfang) des Bandes von einem Sollwert bestimmt, wobei entsprechend der Abweichung des Verlaufs die Masse des Bandes in Abhängigkeit von der Position des Bandes bezogen auf die Referenzposition durch Hinzufügen von Material erhöht wird oder Masse des Bandes durch Entfernen von Material des Bandes verringert wird. In dieser bevorzugten Ausgestaltung der Erfindung wird demnach nicht nur die Richtung sondern auch der Betrag der erforderlichen Massenänderung über die Länge des Bandumfangs bestimmt.

In weiterer Ausgestaltung der Erfindung wird eine ermittelte Abweichung des Signals, insbesondere des Kraftsignals, ausnahmslos durch Entfernung von Bandmaterial ausgeglichen. Insbesondere bei einer symmetrischen Geometrie und/oder vorzugsweise gleichem Wellendurchmesser entspricht ein notwendiges Hinzufügen von Material in einem ersten Bereich einem Entfernen von Material in wenigstens einem (zu dem ersten Bereich komplementären) zweiten Bereich des Bandumfangs.

Selbstverständlich ist es aber auch denkbar, ein Hinzufügen von Material auf das Band zu vermeiden, indem man das Maximum der Hinzufügung an Material (in Abhängigkeit von der Position des Bandes bezogen auf die Referenzposition) als Offset berücksichtigt. Beispielsweise kann die Bandbreite um einen entsprechenden Offset verringert werden, so dass ein Maximum an hinzuzufügendem Material an einer beliebigen Position des Bandumfangs durch die ursprüngliche Bandbreite dargestellt wird.

In weiterer Ausgestaltung der Erfindung wird aus dem Signal eine Schnittkurve ermittelt, die in Abhängigkeit von der Position des Bandes bezogen auf die Referenzposition, und damit eindeutig für jede Position des Bandes, das Maß, insbesondere Schnittbreite bzw. Schnitttiefe (quer zur Transportrichtung/Bandlaufrichtung) des zu entfernenden Materials angibt. Hierdurch kann vorteilhafterweise eine Abweichung, insbesondere außerhalb einer vordefinierten Toleranz, der Massenhomogenität ausgeglichen werden.

In besonders bevorzugter Ausgestaltung der Erfindung wird Material ausnahmslos vom Rand des Bandes entfernt, wobei vorzugsweise die Bandbreite über den Bandumfang mithilfe eines vorstehend erläuterten Offsets oder unter Ausnutzung der Symmetrieeigenschaft ohne Hinzufügung von Material verringert wird (und maximal die ursprüngliche Breite aufweist). Statt der Bearbeitung beider Bandränder ist es selbstverständlich auch möglich das Band nur an einer Seite (Bandrand) zu bearbeiten.

Statt einem vorstehend erläuterten Entfernen von Bandmaterial ist in analoger Weise auch ein Hinzufügen von Material denkbar, wobei ebenfalls die vorstehend erläuterten Prinzipien, nämlich Hinzufügen von Material in wenigstens einem zweiten Bereich statt einem Entfernen von Material in einem ersten hierzu komplementären Bereich (Verschiebung in der Bandumfangslänge) oder Anwendung eines Offsets bzw. einer (vertikalen, in Richtung der Ordinate) Nullpunktverschiebung der inversen Schnittkurve, angewendet werden können, um ausschließlich Material hinzuzufügen. Selbstverständlich sind aber auch Mischformen denkbar.

In weiterer Ausgestaltung der Erfindung werden zur Ermittlung des Signals, insbesondere Wägesignals, eine Vielzahl von Umläufen des Bandes durchgeführt und die Wägesignale gemittelt, um andere Einflüsse, wie beispielsweise Motorunwucht oder Wellenunwucht, zu minimieren.

In besonders vorteilhafter Ausgestaltung der Erfindung wird die zu ändernde Masse in Abhängigkeit von der Position des Bandes bezogen auf die Referenzposition, also an einer jeweiligen Position des Bandes, direkt aus dem Signal, insbesondere Gewichtssignal (mittels inverser Faltung oder mathematisch iterativer Verfahren) berechnet oder indirekt (experimentell) iterativ ermittelt.

Selbstverständlich sind diesbezüglich auch Mischformen anwendbar, so dass ein Ergebnis einer durchgeführten Optimierung des Bandes mittels einer erneuten Anwendung des erfindungsgemäßen Verfahrens (inklusive Wechsel von Berechnung zu experimentell iterativer Ermittlung) überprüft und weiter optimiert werden kann.

In weiterer Ausgestaltung der Erfindung wird zur Änderung der Masse in Abhängigkeit von der Position des Bandes bezogen auf die Referenzposition, die Breite des Bandes verringert, wobei die Breite des Bandes an einer beliebigen Position dem Produkt aus der mittleren Bandbreite und dem Quotienten der Masseänderung zur mittleren Masse (pro Länge) entspricht. Diese Näherung ist vor allem dann zulässig, wenn der Verlauf der Masseninhomogenität über die Bandbreite im Wesentlichen konstant ist bzw. gegenüber den Bandrandbereichen keine starken Veränderungen aufweist.

Wie bereits vorstehend erläutert, wird als Signal vorzugsweise ein Wägesignal während eines Leerlaufs mittels einer Wägezelle bzw. eines Wägesensors über wenigstens einen Umlauf aufgezeichnet (Speichereinrichtung) und in einer Auswerteeinheit entsprechend ausgewertet. Zur eindeutigen Bestimmung einer Referenzposition weist die erfindungsgemäße Vorrichtung einen Detektor, beispielsweise einen Sensor, insbesondere eine Reflexlichtschranke, zum Detektieren der eindeutigen Referenzposition, insbesondere einer (beispielsweise aufgezeichneten) Markierung des Bandes, auf. Eine derartige Markierung ist von der Masse so gering und verändert die Banddicke nicht, so dass die Massenverhältnisse nicht (wesentlich) verändert werden.

Auch wenn das erfindungsgemäße Verfahren durchaus in all seinen Ausgestaltungen mittels analoger Technik (Sensoren, Auswertung, etc.) bzw. kontinuierlich durchgeführt werden kann, wird das erfindungsgemäße Verfahren in besonders bevorzugter Ausgestaltung, insbesondere die Ermittlung der Schnittkurve, vorzugsweise mittels zeilenweiser Abtastung entlang der Bandlaufrichtung, diskret durchgeführt. Vorzugsweise wird die Abtastrate derart gewählt, dass pro halben Wellenumfang ($R*\pi$) unter Einbeziehung der Bandgeschwindigkeit wenigstens zweimal, vorzugsweise mehr als 10-mal, abgetastet wird.

Die erfindungsgemäße Vorrichtung ermittelt aus dem Signal den Verlauf einer Abweichung des Signals von einem Sollwert infolge einer Störkraft in Abhängigkeit von der Position des Bandes bezogen auf die Referenzposition.

Entsprechend der ermittelten Abweichung kann die Masse des Bandes (in Abhängigkeit von der Position des Bandes bezogen auf die Referenzposition) durch Hinzufügen von Material erhöht oder die Masse des Bandes durch Entfernen von Material des Bandes verringert werden.

Ein Entfernen von Material kann manuell, beispielsweise unter Anzeige der Positionen des Bandes, oder automatisch, beispielsweise mittels eines entsprechenden Werkzeugs, wie Messer, Fräse, Ultraschallmesser, Laser, Stanzwerkzeug, etc. erfolgen.

Das Hinzufügen von Material auf das Band kann beispielsweise durch Aufbringen von Kunststoff, Harz, Gummi oder Ähnlichem, vorzugsweise mit einer Dosierspritze, erfolgen. Um die Banddicke nicht zu verändern können beispielsweise Vertiefungen in strukturierten Bandoberflächen bzw. Gewebe des Bandes (mit einer sich später verfestigenden Flüssigkeit) verfüllt werden.

Der Begriff Band bezeichnet im Sinne der Erfindung ein Endlosband, unter dem Ausgestaltungen als Riemen, Zahnriemen, Gurt, Kette, etc. zu verstehen sind.

Durch das erfindungsgemäße Verfahren, sowie die Vorrichtung zu dessen Durchführung, lassen sich vorteilhafterweise im Band vorhandene Masseninhomogenitäten, und hierdurch verursachte Unwucht, ausgleichen bzw. vermindern, auch wenn die Masseninhomogenität außerhalb einer problematischen Stelle, nämlich der Nahtstelle (Gurt-, Riemen-, Bandnaht), an welcher das Endlosband verbunden ist, liegt.

Zudem können auch mehrere einzelne Stellen oder ein kontinuierlicher Verlauf einer Masseninhomogenität ausgeglichen werden, ohne dass ein ansonsten außerhalb einer geforderten Toleranz (hinsichtlich einer zulässigen Unwucht bzw. eines Gurtschlags) liegendes Band für die Verwendung ausscheiden (Ausschuss) müsste. Besonders für hochpräzise Wägesysteme können durch die Verwendung eines nach der Erfindung optimierten Bandes auf einfache Art und Weise präzise Wägeergebnisse gewährleist werden.

Die Erfindung wird nachfolgend anhand eines in der Zeichnung dargestellten Ausführungsbeispiels näher erläutert.

In der Zeichnung zeigen:

Fig. 1    eine schematische Seitenansicht auf einen Wägebandförderer;

Fig. 2    eine Draufsicht auf den Wägebandförderer nach Fig. 1;

Fig. 3    ein Diagramm der Beschleunigung eines Massepunktes;

Fig. 4    ein Diagramm eines gemittelten Gewichtssignals einer Vielzahl von Leerläufen des Wägebandförderers nach Fig. 1 und 2;

Fig. 5    ein Diagramm einer aus dem Gewichtssignal nach Fig. 3 ermittelten Schnittkurve (Schnittanweisung bzw. Schnittbreite) und

Fig. 6    eine Draufsicht auf ein entsprechend der Schnittanweisung an einem Rand bearbeitetes Endlosband eines Wägebandförderers.

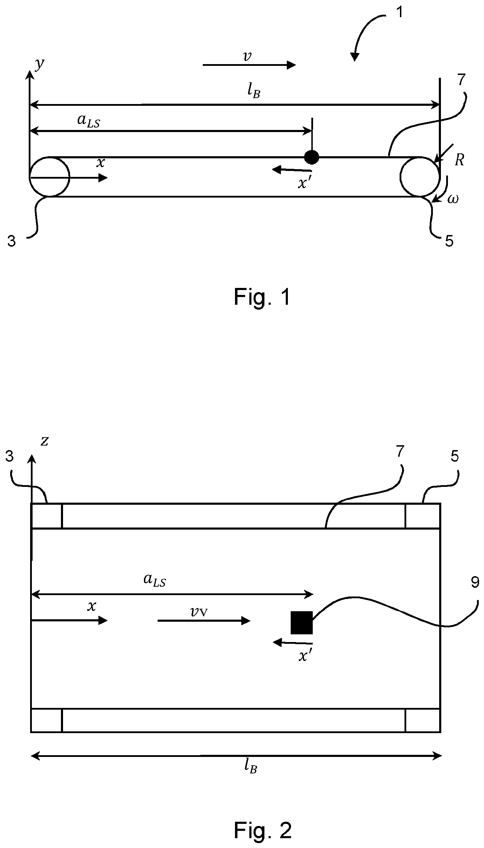

Der in Fig. 1 dargestellte Wägebandförderer 1 weist zwei äußere Wellen 3 (linke Welle) und 5 (rechte Welle) auf, an welchen ein Endlosband 7, nämlich dessen Obertrum, aus der Förderrichtung umgelenkt wird.

Wie aus Fig. 2 ersichtlich, wurde auf dem Endlosband 7 als Referenzposition eine Markierung 9 aufgebracht, beispielsweise aufgezeichnet oder aufgedruckt, die vorteilhafterweise nach der Durchführung des erfindungsgemäßen Verfahrens wieder entfernt werden kann. Diese Markierung 9 wird im Leerlaufbetrieb (ohne Produkte) von einem Detektor, beispielsweise einer Reflexlichtschranke, an der Position $a_{LS}$ detektiert.

x ist allgemein die Koordinate des Bandkörpers in Transportrichtung. x' ist die Koordinate des Gurtes, die von 0 bis $l_G$, also über den gesamten Gurtumfang läuft.. Bei x'=0 befindet sich auf dem Gurt die Markierung 9 für die Lichtschranke. Zum Zeitpunkt t=0 befindet sich die Markierung 9 genau unterhalb der Lichtschranke.

Bei einer nominellen Bandlänge $l_B$ ergibt sich ein Umfang des Endlosbandes (oft als Gurtlänge oder Riemenlänge bezeichnet) von

$$l_G = 2 \cdot (l_B - 2R) + 2\pi \cdot R$$

Wird ein Endlosband 7 von einem Hersteller geliefert, sind dessen Ränder, wie aus Fig. 2 ersichtlich (in der Zeichnung gerade obere und untere horizontale Linien), weitgehend gerade und glatt und zueinander parallel ausgebildet.

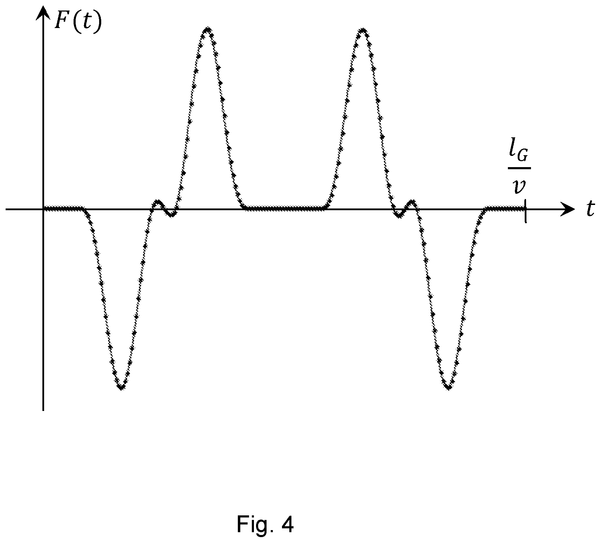

Unterzieht man ein derartiges Endlosband 7 (wie in Fig. 1, 2 und 6 dargestellt, montiert auf den Wellen 3 und 5 eines Wägebandförderers) einer Vielzahl, beispielsweise 100, Umläufen, werden (aufgrund von Schlupf zwischen Welle und Band) nichtphasensynchrone Störungen (Motorunwucht, Wellenunwucht, etc.) aus einem detektierten Kraftsignal, insbesondere Gewichtssignal F(t), wie in Fig. 4 dargestellt, herausgemittelt.

Im Folgenden wird ein mathematisches Verfahren erläutert, welches vorzugsweise zur Berechnung einer Schnittkurve verwendet werden kann, um entsprechend Material zu entfernen und hierdurch die detektierte Unwucht auszugleichen.

Für t=0 befindet sich eine punktförmige Masse $m_0$ an der Lichtschrankenposition. Bewegt sich das Endlosband bzw. der Gurt mit einer Bandgeschwindigkeit v, so ergibt sich im Falle zweier Wellen mit gleichem Radius R folgendes Kraftsignal.

$$F_0(t) = \begin{cases} -m_0 \cdot R \cdot \omega^2 \cdot \cos\left(\omega \cdot \left(t - \frac{l_B - a_{LS} - R}{v}\right)\right) & \text{für} \quad \frac{l_B - a_{LS} - R}{v} \leq t \leq \frac{l_B - a_{LS} - R + \pi R}{v} \\ m_0 R \cdot \omega^2 \cdot \cos\left(\omega\left(t - \frac{2l_B - a_{LS} - 3R - \pi R}{v}\right)\right) & \text{für} \quad \frac{2l_B - a_{LS} - 3R + \pi R}{v} \leq t \leq \frac{2l_B - a_{LS} - 3R + 2\pi R}{v} \\ 0 \quad \text{sonst} \end{cases}$$

$\omega = \frac{v}{R}$ ist die Kreisfrequenz der Welle.

Im Fall von mehreren Wellen und/oder unterschiedlichen Wellenradien, wie auch im Fall einer senkrechten Anordnung lässt sich die Formel entsprechend aufstellen.

Die Kraft kann jetzt noch auf die Masse normiert werden, so dass sich die Beschleunigung, die eine punktförmige Masse bei einem Umlauf erfährt, ergibt.

$$a_0(t) = \frac{F_0(t)}{m_0}$$

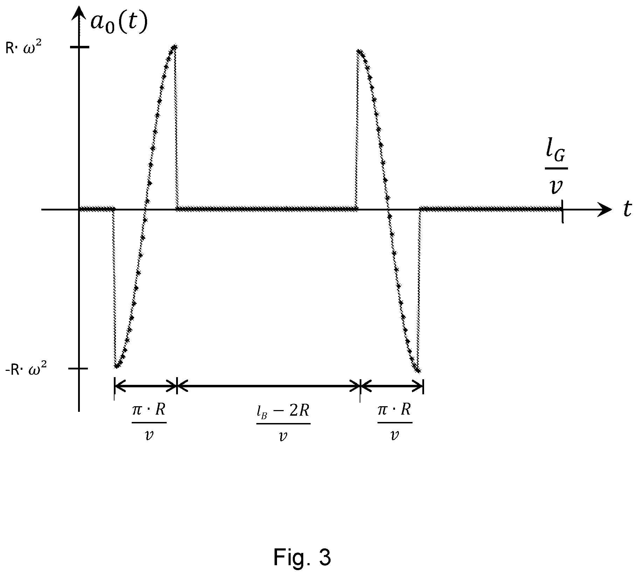

Diese Funktion ist dann nur noch von Geometrie und Geschwindigkeit (siehe Fig. 3) abhängig.

Setzt man das Signal $F_0(t)$ periodisch fort, so hat es folgende interessante Symmetrieeigenschaft:

$$F_0\left(t - \frac{l_G}{2v}\right) = F_0(-t)$$

Für eine punktförmige Masse $m_1$ an der Gurtposition $x'_1$ hat das Kraftsignal die (Zeit-) Funktion.

$$F_1(t) = \frac{m_1}{m_0} F_0\left(t - \frac{x'_1}{v}\right)$$

Für viele Massen $m_i$ an den Gurtpositionen $x'_i$ ergibt sich dann das Summensignal

$$F(t) = m_0 a_0(t) + m_1 a_0\left(t - \frac{x'_1}{v}\right) + m_2 a_0\left(t - \frac{x'_2}{v}\right) + \cdots + m_{N-1} a_0\left(t - \frac{x'_{N-1}}{v}\right) = \sum_{n=0}^{N-1} m_n a_0\left(t - \frac{x'_n}{v}\right)$$

Praktisch liegt aber eine Messung meist nicht als kontinuierliche Zeitfunktion, sondern, wie in Fig. 4 dargestellt, als eine zeitlich abgetastete Funktion der Kraft F(n) mit n als zeitlich Abtastung, vor. Ebenso wird aus $a_0(t)$ $a_0(n)$. Das Abtastintervall sei z. B. $T_a$ = 1$ms$. In der Zeit $T_a$ bewegt sich der Gurt um den Weg $x_a = v \cdot T_a$ weiter.

Der Gurt wird gedanklich in kleine Streifen geteilt. Die Streifen haben als lange Seite die Gurtbreite $b_G$ und als kurze Seite die Streifenlänge $x_a$. Diese Streifen haben jeweils die Masse $m(k)$ mit k als Zählindex der Streifen. Die gesamte Gurtmasse bestehend aus N Streifen ist:

$$m_G = \sum_{k=0}^{N-1} m(k)$$

Aus Gleichung F(t) wird dann im zeitdiskreten Fall mathematisch gesehen die Faltungssumme.

$$F(n) = \sum_{k=0}^{N-1} m(k) \cdot a_0(n-k)$$

Den gesuchten Massenbelag m(k) erhält man durch inverse Faltung, die üblicherweise über die inverse diskrete Fourier-Transformation erfolgen kann.

$F(n)$ muss die gleiche Symmetrieeigenschaft wie $a_0(n)$ haben, wenn das Gewichtsignal bei Bandlauf nur aufgrund einer ungleichen Massenverteilung des Gurtes entsteht und die Wellen 3, 5 den gleichen Radius R haben.

$$F\left(n - \frac{N}{2}\right) = -F(n)$$

Das gilt in dieser Form für gerades N, was der Einfachheit halber zunächst vorausgesetzt werden kann. Andernfalls ist ein Interpolieren erforderlich.

In jedem Fall ist es sinnvoll, die Symmetrie zu überprüfen. Dazu kann man die beiden Hälften einer Periode von $F(n)$ miteinander mitteln.

$$\bar{F}(n) = \frac{1}{2} \cdot \left(F(n) - F\left(n - \frac{N}{2}\right)\right)$$

Gilt $F(n) \approx \bar{F}(n)$, so kann man damit weiterrechnen. Im einfachsten Fall kann man dies nach Überlagerung der beiden Zeitfunktionen durch Betrachtung überprüfen. Ist die Bedingung nicht erfüllt, so hat die Grundunruhe im Gewichtsignal andere Ursachen als die Massenverteilung des Gurtes.

Um die Schnittbreite bzw. Schnitttiefe senkrecht zur Bandlaufrichtung zu ermitteln, kann dann folgende Proportionalität verwendet werden, die eine hinreichende Näherung darstellt:

$$\frac{m(k)}{m_G \big/ N} = \frac{b_s(k)}{b_G}$$

$$\boxed{b_s(k) = \frac{b_G \cdot N}{m_G} \cdot m(k)}$$

mit $b_s(k)$ = Breite des um ein Stück verringerten Streifens k

Diese Näherung ist vor allem dann zulässig, wenn der Verlauf der Masseninhomogenität über die Bandbreite im Wesentlichen konstant ist bzw. gegenüber den Bandrandbereichen keine starken Veränderungen aufweist.

Bei Verwendung einer in der Zeichnung nicht dargestellten vorzugsweise hochpräzisen Wägezelle, deren Wägeauflage durch den in Fig. 1, 2 und 6 schematisch dargestellten Bandförderer inklusive Endlosband 7 und Wellen 3, 5 gebildet wird, ergibt sich beispielsweise (bei Vorliegen einer Masseninhomogenität) mittels eines Abtastintervalls $T_a$ von beispielsweise 1ms im Leerlauf ein gemitteltes Gewichtssignal F(t), wie in Fig. 4 überproportional schematisch dargestellt.

Obwohl sich kein zu förderndes und zu wiegendes Gut auf dem Wägeband 7 befindet (sogenannter Leerlauf), ist sind in dem Gewichtssignal F(t) deutlich ein (oder mehrere) sich (invers) wiederholender Ausschlag zu erkennen. Liegt die Amplitude dieses Ausschlags außerhalb einer geforderten (in der Zeichnung nicht dargestellten) Toleranz (gewünschte Messgenauigkeit der Wägevorrichtung), so muss diese Störung vermindert oder gar beseitigt werden.

Da das Gewichtssignal F(t) vorzugsweise über eine Vielzahl von Umläufen gemittelt wurde, da andere Störparameter aufgrund der Phasenverschiebung in diesem Signal (infolge der Mittelung) nicht mehr auftreten, kann bei detektierten Ausschlägen auf eine Unwucht des Bandes geschlossen werden.

Eine Unwucht des Bandes ist aber, wie vorstehend erläutert, in einer Inhomogenität des Bandes bzw. ungleichen Massenverteilung der Masse des Bandes begründet. Diese ungleiche Massenverteilung führt an einer Welle bei Ablenkung aus der Linearen (meist Horizontalen) zu einer auf sie wirksamen Beschleunigung ($R \cdot \omega^2$), wobei in idealer Betrachtung ein Massepunkt eine Beschleunigung $a_0(t)$ in Richtung der detektierten Kraft, insbesondere Gewichtskraft, wie in Fig. 3 dargestellt, erfährt.

Entsprechend wirkt sich die in Folge der Beschleunigung begründete Zentripetalkraft/Zentrifugalkraft mit ihrer gerichteten Komponente auf das detektiert Kraftsignal $F_0(t)$, insbesondere Gewichtssignal, aus.

Das in Fig. 4 dargestellte, beispielsweise mittels eines Wägesensors gemessene Kraftsignal F(t), insbesondere Gewichtssignal, enthält einen sich bei einem kompletten Umlauf des Bandes wiederholenden (nach zurückgelegter halber Bandumfangslänge $I_G/2$) inversen Ausschlag, der von dem Umlaufen einer Masseninhomogenität zuerst der rechten Welle 3 und dann der linken Welle 5, in diesem Fall gleichem Radius R verursacht wird.

Im Falle einer symmetrischen Geometrie, insbesondere bei gleichen Wellenradien R, wie in Fig. 1 dargestellt, reicht es daher, eine Hälfte des Bandumfanges $I_G$ zu betrachten, da es für das detektierte Gewichtsignal F(t) egal ist, ob an der einen Seite zu viel oder auf der anderen Seite zu wenig Masse ist.

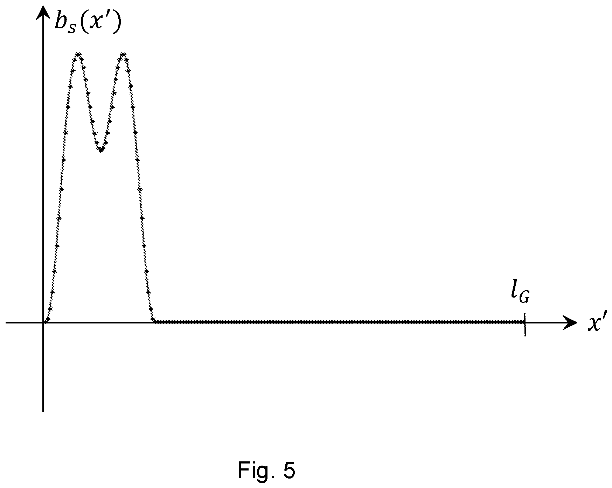

Aus diesem Gewichtssignal F(t) kann unter verschiedenen Verfahren eine in Fig. 5 dargestellte Schnittkurve $b_s(x')$ ermittelt werden, gemäß welcher wenigstens ein Bandrand (vorzugsweise nur eine Seite) zu bearbeiten ist (Schnittbreite pro Position bzw. Schnittbreite pro Abtastintervall). Die Schnittbreite $b_s$ ist die Breite eines Streifens der Länge $x_a$ (entlang der Transportrichtung gesehen), der abgeschnitten wird.

Bei einem Abtastintervall von 1 ms und einer Transportgeschwindigkeit v = 3 m/s ergibt sich beispielsweise eine Streifenlänge (in Transportrichtung gesehen) von 3 mm bzw. eine Abtastung alle 3 mm entlang des Bandumfangs. Bei einem Wellendurchmesser von beispielsweise 17,2 mm ergeben sich für einen halben Wellenumfang von 27,0 mm damit wenigstens 9 Abtastungen, so dass dieser für eine Störung des Gewichtssignals relevant Bereich hoch genug (mindestens 2 Abtastungen) aufgelöst ist, um die Schnittbreite für diesen Streifen k zu ermitteln.

Beispielsweise kann eine Schnittkurve $b_s(x')$, wie in Fig. 5 dargestellt, aus $b_s(k)$ mit $x'=k*x_a$ ermittelt werden.

Hierzu ist allerdings - wie beispielsweise vorstehend erläutert - das Ermitteln der Bandmasse pro abgetasteter Längeneinheit m(k) bei ansonsten bekannten Parametern, wie Band- bzw. Gurtbreite $b_G$, Bandmasse bzw. gesamte Masse des Bandes $m_G$, etc. erforderlich.

Zudem kann bei derartigen Sonderfällen ein Band bzw. ein Gurt ausgewuchtet werden, indem statt einem ermittelten erforderlichen Hinzufügen von Material auf das Band (in der ersten Hälfte des Bandumfangs) gleichwertig hierzu ein Entfernen von Bandmaterial (Abschneiden des Gurtrandes) in der zweiten Bandhälfte (um den halben Bandumfang $\frac{l_G}{2}$ verschoben) erfolgt.

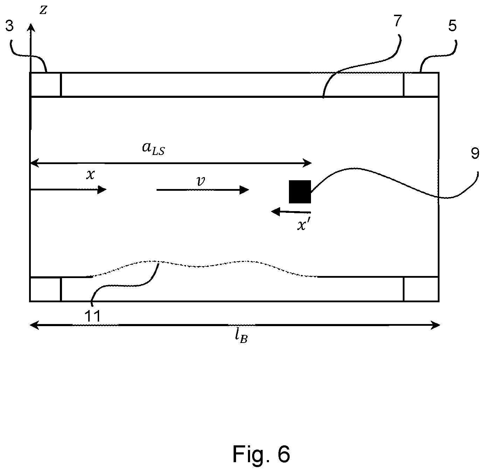

Das in Fig. 6 dargestellte Band 7 weist einen in der Zeichnung dargestellten unteren Rand 11 auf, der entsprechend der Schnittkurve $b_s(x')$ zugeschnitten wurde. In dieser im Detail überdeutlichen Darstellung ist daher die entsprechende Kurve der zu (in Richtung z) verringernden Breite $b_s(x')$ abgebildet.

Statt einer, wie in Fig. 1 dargestellten, waagrechten Anordnung eines Wägebandförderers ist es auch denkbar, die Vorrichtung zur Optimierung von Laufeigenschaften eines umlaufenden Bandes eines Wägebandförderers senkrecht - gekippt um eine Achse senkrecht zur Zeichenebene - anzuordnen. Die vorstehenden Ausführungen hinsichtlich Kraftsignal, Störkraft und Schnittkurve etc. ergeben sich für einen Fachmann in diesem Fall dann in analoger Weise.

Vorteilhafterweise beeinträchtigen in einer derartigen Ausgestaltung Gurtbewegungen und Gurtschwingungen im Obertrum und Untertrum senkrecht zur Bandebene das Ergebnis (F(t)) nicht.

Für das Schneiden der Gurte kommen beispielsweise Laser, Messer, Ultraschallmesser, aber auch ein Fräsen oder Stanzen in Frage.

Selbstverständlich ist es auch denkbar, statt am Rand des Bandes Material abzuschneiden, das Band auch mit einem Lochmuster, beispielsweise am Rand geschnitten oder gestanzt, zu wuchten.

Die vorstehend erläuterten Ausführungen bezüglich einem Entfernen von Bandmaterial zum Ausgleichen einer detektierten Unwucht können in analoger Weise auch auf das Hinzufügen von Material auf das Band angewendet werden.

Bezugszeichenliste:

| | |
|---|---|
| 1 | Wägebandförderer |
| 3 | linke Welle |
| 5 | rechte Welle |
| 7 | Endlosband |
| 9 | Markierung |
| 11 | entsprechend der Schnittkurve beschnittener Rand des Bandes |
| x=0 | Referenzposition bei t=0 |
| t=0 | Beginn eines Zyklus bei x=0 |
| $l_B$ | Nominelle Bandlänge |
| $l_G$ | Bandumfang |
| R | Wellenradius |
| F(t) | Gewichtssignal |
| $m_0$ | punktförmige Masse |
| $\omega$ | Kreisfrequenz der Welle (v/R) |
| $m_G$ | Gesamtmasse des Bandes bzw. Gurtes (Bandmasse) |
| T | Umlaufperiodendauer des Bandes |
| $T_a$ | Abtastintervall |
| v | Bandgeschwindigkeit |
| $x_a$ | kurze Seite des Streifens (Streifenlänge) |
| m(k) | Masse des Streifens k |
| N | Anzahl der Streifen |
| $b_s(k)$ | Breite des um ein Stück verringerten Streifens k |
| $b_G$ | Gurtbreite |

**Patentansprüche**

1. Verfahren zur Optimierung der Laufeigenschaften eines umlaufenden Bandes (7) eines Wägebandförderers (1), bei dem

    a) für wenigstens einen Umlauf des Bandes (7) eine eindeutige Referenzposition (x'=0) auf dem Band (7) in Umlaufrichtung ($\omega$) des Bandes (7) bestimmt wird,
    b) in Abhängigkeit von der Bewegung der Referenzposition (x'=0) während des wenigstens einen Umlaufs ein Kraftsignal (F(t)) in vordefinierter Richtung ermittelt wird,
    **dadurch gekennzeichnet, dass**
    c) aus dem Signal der Verlauf einer Abweichung des Kraftsignal (F(t)) von einem Sollwert infolge einer Störkraft ermittelt wird und
    d) wenigstens entsprechend der Richtung der ermittelten Abweichung in Abhängigkeit von der Position (x') des Bandes (7) bezogen auf die Referenzposition (x'=0) die Masse des Bandes (7) durch Hinzufügen von Material erhöht wird oder die Masse des Bandes (7) durch Entfernen von Material des Bandes (7) verringert wird.

2. Verfahren nach Anspruch 1, **dadurch gekennzeichnet, dass** aus dem Kraftsignal (F(t)) eine Abweichung des Verlaufs der Homogenität des Massenbelages des Bandes (7) von einem Sollwert bestimmt wird, wobei entsprechend der Abweichung des Verlaufs die Masse des Bandes (7) in Abhängigkeit von der Position (x') des Bandes (7) bezogen auf die Referenzposition (x'=0) durch Hinzufügen von Material erhöht wird oder Masse des Bandes durch Entfernen von Material des Bandes (7) verringert wird.

3. Verfahren nach Anspruch 1 oder 2, **dadurch gekennzeichnet, dass** eine ermittelte Abweichung des Signals (F(t)) ausnahmslos durch Entfernung von Bandmaterial ausgeglichen wird, wobei statt einem erforderlichen Hinzufügen in einem ersten Bereich, Material in wenigstens einen dazu komplementären Bereich entfernt wird.

4. Verfahren nach Anspruch 1 oder 2, **dadurch gekennzeichnet, dass** eine ermittelte Abweichung des Signals (F(t)) ausnahmslos durch Entfernung von Bandmaterial ausgeglichen wird, indem bei einem Entfernen von Bandmaterial zusätzlich das Maximum der Hinzufügung von Material als Offset berücksichtigt wird.

5. Verfahren nach Anspruch 3 oder 4, **dadurch gekennzeichnet, dass** aus dem Signal eine Schnittkurve ($b_s(x')$) ermittelt wird, die in Abhängigkeit von der Position (x') auf dem Band (7) bezogen auf die Referenzposition (x'=0) das Maß des zu entfernenden Materials angibt.

6. Verfahren nach einem der vorhergehenden Ansprüche, **dadurch gekennzeichnet, dass** Material von wenigstens einem Seitenrand des Bandes (7) entfernt wird.

7. Verfahren nach einem der vorhergehenden Ansprüche, **dadurch gekennzeichnet, dass** Material nur von einem Seitenrand des Bandes (7) entfernt wird.

8. Verfahren nach einem der vorhergehenden Ansprüche, **dadurch gekennzeichnet, dass** zur Ermittlung des Signals eine Vielzahl von Umläufen des Bandes (7) durchgeführt werden und die Signale (F(t)) gemittelt werden.

9. Verfahren nach einem der vorhergehenden Ansprüche, **dadurch gekennzeichnet, dass** die zu ändernde Masse des Bandes (7) in Abhängigkeit von der Position (x') auf dem Band (7) bezogen auf die Referenzposition (x'=0) direkt aus dem Signal (F(t)) berechnet wird oder iterativ ermittelt wird.

10. Verfahren nach Anspruch 9, **dadurch gekennzeichnet, dass** zur Änderung der Masse in Abhängigkeit von der Position (x') auf dem Band (7) bezogen auf die Referenzposition (x'=0) die Breite des Bandes (7) verringert wird, wobei die Breite des Bandes (7) an einer beliebigen Position dem Produkt aus der mittleren Bandbreite und dem Quotienten von Masseänderung und mittlerer Masse entspricht.

11. Vorrichtung zur Durchführung eines Verfahrens nach einem der vorhergehenden Ansprüche,

   a) mit einem Kraft- und/oder Beschleunigungssensor zum Aufzeichnen eines Signals einer Kraft (F(t)) während eines Leerlaufs,
   **dadurch gekennzeichnet, dass**
   b) die Vorrichtung einen Detektor zum Detektieren einer eindeutigen Referenzposition (x'=0) auf einem Band (7) aufweist und
   c) die Vorrichtung eine Auswerteeinheit aufweist, mittels welcher aus dem Kraftsignal (F(t)) der Verlauf einer Abweichung des Signals (F(t)) von einem Sollwert infolge einer Störkraft ermittelt wird und wenigstens die Richtung der ermittelten Abweichung in Abhängigkeit von der Position (x') des Bandes (7) bezogen auf die Referenzposition (x'=0) bestimmt wird, um entsprechend der ermittelten Abweichung die Masse des Bandes (7) in Abhängigkeit von der Position (x') des Bandes (7) bezogen auf die Referenzposition (x'=0) durch Hinzufügen von Material zu erhöhen oder die Masse des Bandes (7) durch Entfernen von Material des Bandes (7) zu verringern.

12. Vorrichtung nach Anspruch 11, **dadurch gekennzeichnet, dass** die Auswerteeinrichtung derart ausgebildet ist, dass aus dem Kraftsignal (F(t)) eine Abweichung des Verlaufs der Homogenität des Massenbelages des Bandes (7) von einem Sollwert bestimmt wird, um entsprechend der Abweichung des Verlaufs der Homogenität des Massenbelages die Masse des Bandes (7) in Abhängigkeit von der Position (x') des Bandes (7) bezogen auf die Referenzposition (x'=0) durch Hinzufügen von Material zu erhöhen oder die Masse des Bandes (7) durch Entfernen von Material des Bandes (7) zu verringern.

13. Vorrichtung nach Anspruch 11 oder 12, **dadurch gekennzeichnet, dass** die Vorrichtung ein Werkzeug zum automatisierten Entfernen von Bandmaterial und/oder zum Hinzufügen von Material auf das Band (7) aufweist.

14. Wägeband zum Einsatz in einem Wägebandförderer als umlaufendes Band (7), **dadurch gekennzeichnet, dass** das Band (7) nach einem Verfahren der Ansprüche 1 bis 10 optimiert wurde.

15. Wägesystem mit einem Wägeband (7) nach Anspruch 14.

**Claims**

1. Method for optimizing the running characteristics of a circulating belt (7) of a weighing belt conveyor (1), in which

a) a unique reference position (x'=0) on the belt (7) in the circulation direction (ω) of the belt (7) is defined for at least one circulation of the belt (7),
b) a force signal (F(t)) in a predefined direction is determined on the basis of the movement of the reference position (x'=0) during the at least one circulation,
**characterized in that**
c) the curve of a deviation of the force signal (F(t)) from a target value as a result of an interference force is determined from the signal, and
d) the mass of the belt (7) is increased by adding material or the mass of the belt (7) is reduced by removing material of the belt (7), at least in accordance with the direction of the determined deviation, on the basis of the position (x') of the belt (7) relative to the reference position (x'=0).

2. Method according to claim 1, **characterized in that** a deviation of the curve of the homogeneity of the area density of the belt (7) from a target value is defined from the force signal (F(t)), in accordance with the deviation of the curve, the mass of the belt (7) being increased on the basis of the position (x') of the belt (7) relative to the reference position (x'=0) by adding material or mass of the belt being reduced by removing material of the belt (7).

3. Method according to claim 1 or 2, **characterized in that** a determined deviation of the signal (F(t)) is compensated for without exception by removing belt material, material being removed into at least one region complementary thereto instead of a required addition in a first region.

4. Method according to claim 1 or 2, **characterized in that** a determined deviation of the signal (F(t)) can be compensated for without exception by removing belt material, by additionally taking into account the maximum of the addition of material as an offset when belt material is removed.

5. Method according to claim 3 or 4, **characterized in that** an intersection curve ($b_s(x')$) is determined from the signal, which curve indicates, on the basis of the position (x') on the belt (7) in relation to the reference position (x'=0), the amount of the material to be removed.

6. Method according to any of the preceding claims, **characterized in that** material is removed from at least one lateral edge of the belt (7).

7. Method according to any of the preceding claims, **characterized in that** material is removed only from one lateral edge of the belt (7).

8. Method according to any of the preceding claims, **characterized in that** a plurality of circulations of the belt (7) are carried out and the signals (F(t)) are averaged in order to determine the signal.

9. Method according to any of the preceding claims, **characterized in that** the mass of the belt (7) to be changed is calculated or iteratively determined directly from the signal (F(t)) on the basis of the position (x') on the belt (7) relative to the reference position (x'=0).

10. Method according to claim 9, **characterized in that** the width of the belt (7) is reduced in order to change the mass on the basis of the position (x') on the belt (7) relative to the reference position (x'=0), the width of the belt (7) at any position corresponding to the product of the average belt width and the quotient of mass change and average mass.

11. Device for carrying out a method according to any of the preceding claims,

a) comprising a force- and/or acceleration sensor for recording a signal of a force (F(t)) during an idle operation,
**characterized in that**
b) the device has a detector for detecting a unique reference position (x'=0) on a belt (7), and
c) the device has an evaluation unit, by means of which the curve of a deviation of the signal (F(t)) from a target value as a result of an interference force is determined from the force signal (F(t)) and at least the direction of the determined deviation is defined on the basis of the position (x') of the belt (7) relative to the reference position (x'=0) in order to increase the mass of the belt (7), by adding material, in accordance with the determined deviation, on the basis of the position (x') of the belt (7) relative to the reference position (x'=0), or to reduce the mass of the belt (7) by removing material of the belt (7).

12. Device according to claim 11, **characterized in that** the evaluation device is designed such that a deviation of the curve of the homogeneity of the area density of the belt (7) from a target value is defined from the force signal (F(t)) in order to increase the mass of the belt (7), by adding material, in accordance with the deviation of the curve of the homogeneity of the area density of the mass of the belt, on the basis of the position (x') of the belt (7) relative to the reference position (x'=0), or to reduce the mass of the belt (7) by removing material of the belt (7).

13. Device according to claim 11 or 12, **characterized in that** the device has a tool for automated removal of belt material and/or for adding material onto the belt (7).

14. Weighing belt for use in a weighing belt conveyor as a circulating belt (7), **characterized in that** the belt (7) was optimized according to a method of claims 1 to 10.

15. Weighing system comprising a weighing belt (7) according to claim 14.

**Revendications**

1. Procédé permettant l'optimisation des caractéristiques de fonctionnement d'une bande (7) sans fin d'un convoyeur peseur à bande (1), dans lequel

    a) une position de référence (x'=0) univoque est spécifiée sur la bande (7) dans le sens de rotation (ω) de la bande (7) pour au moins une rotation de la bande (7),
    b) un signal de force (F(t)) dans une direction prédéfinie est déterminé pendant l'au moins une rotation en fonction du déplacement de la position de référence (x'=0),
    **caractérisé en ce que**
    c) l'évolution d'un écart du signal de force (F(t)) par rapport à une valeur seuil en raison d'une force perturbatrice est déterminée à partir du signal et
    d) la masse de la bande (7) est augmentée par ajout de matière ou la masse de la bande (7) est réduite par enlèvement de matière de la bande (7), au moins en fonction de la direction de l'écart déterminé en fonction de la position (x') de la bande (7) par rapport à la position de référence (x'=0).

2. Procédé selon la revendication 1, **caractérisé en ce qu'**un écart de l'évolution de l'homogénéité du revêtement de masse de la bande (7) par rapport à une valeur seuil est spécifié à partir du signal de force (F(t)), en fonction de l'écart de l'évolution, la masse de la bande (7) étant augmentée par ajout de matière en fonction de la position (x') de la bande (7) par rapport à la position de référence (x'=0), ou masse de la bande étant réduite par enlèvement de matière de la bande (7).

3. Procédé selon la revendication 1 ou 2, **caractérisé en ce qu'**un écart déterminé du signal (F(t)) est compensé sans exception par enlèvement de matière de bande, au lieu d'un ajout nécessaire dans une première zone, de la matière étant enlevée dans au moins une zone complémentaire à ladite première zone.

4. Procédé selon la revendication 1 ou 2, **caractérisé en ce qu'**un écart déterminé du signal (F(t)) est compensé sans exception par enlèvement de matière de bande en prenant en compte en outre le maximum de l'ajout de matière comme décalage lors d'un enlèvement de matière de bande.

5. Procédé selon la revendication 3 ou 4, **caractérisé en ce qu'**une courbe de coupe ($b_s(x')$) est déterminée à partir du signal, laquelle courbe de coupe indique, en fonction de la position (x') sur la bande (7) par rapport à la position de référence (x'=0), la dimension de la matière à enlever.

6. Procédé selon l'une des revendications précédentes, **caractérisé en ce que** de la matière est enlevée d'au moins un bord latéral de la bande (7).

7. Procédé selon l'une des revendications précédentes, **caractérisé en ce que** de la matière est enlevée uniquement d'un bord latéral de la bande (7).

**8.** Procédé selon l'une des revendications précédentes, **caractérisé en ce que,** pour la détermination du signal, une pluralité de rotations de la bande (7) sont effectuées et les signaux (F(t)) sont obtenus.

**9.** Procédé selon l'une des revendications précédentes, **caractérisé en ce que** la masse à modifier de la bande (7) est calculée directement à partir du signal (F(t)) ou est déterminée de manière itérative en fonction de la position (x') sur la bande (7) par rapport à la position de référence (x'=0).

**10.** Procédé selon la revendication 9, **caractérisé en ce que,** pour la modification de la masse en fonction de la position (x') sur la bande (7) par rapport à la position de référence (x'=0), la largeur de la bande (7) est réduite, la largeur de la bande (7) à une position quelconque correspondant au produit de la largeur de bande moyenne et du quotient de la modification de masse et de la masse moyenne.

**11.** Dispositif permettant la mise en oeuvre d'un procédé selon l'une des revendications précédentes,

    a) comportant un capteur de force et/ou d'accélération permettant d'enregistrer un signal d'une force (F(t)) pendant un fonctionnement à vide,
    **caractérisé en ce que**
    b) le dispositif présente un détecteur permettant de détecter une position de référence (x'=0) univoque sur une bande (7) et
    c) le dispositif présente une unité d'évaluation à l'aide de laquelle l'évolution d'un écart du signal (F(t)) par rapport à une valeur seuil en raison d'une force perturbatrice est déterminée à partir du signal de force (F(t)) et au moins la direction de l'écart déterminé est spécifiée en fonction de la position (x') de la bande (7) par rapport à la position de référence (x'=0) afin d'augmenter la masse de la bande (7) en fonction de la position (x') de la bande (7) par rapport à la position de référence (x'=0) par ajout de matière ou de réduire la masse de la bande (7) par enlèvement de matière de la bande (7), en fonction de l'écart déterminé.

**12.** Dispositif selon la revendication 11, **caractérisé en ce que** l'appareil d'évaluation est configuré de telle sorte qu'un écart de l'évolution de l'homogénéité du revêtement de masse de la bande (7) par rapport à une valeur seuil est spécifié à partir du signal de force (F(t)) pour augmenter la masse de la bande (7) en fonction de la position (x') de la bande (7) par rapport à la position de référence (x'=0) par ajout de matière ou pour réduire la masse de la bande (7) par enlèvement de matière de la bande (7), en fonction de l'écart de l'évolution de l'homogénéité du revêtement de masse.

**13.** Dispositif selon la revendication 11 ou 12, **caractérisé en ce que** le dispositif présente un outil permettant l'enlèvement automatisé de matière de bande et/ou permettant l'ajout de matière sur la bande (7).

**14.** Bande de pesée destinée à être utilisée dans un convoyeur peseur à bande comme bande (7) sans fin, **caractérisée en ce que** la bande (7) a été optimisée selon un procédé des revendications 1 à 10.

**15.** Système de pesée comportant une bande (7) de pesée selon la revendication 14.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3933710 A1
- DE 202006008946 U1